# EUROPEAN PATENT APPLICATION

(11) **EP 4 518 238 A1**
(43) Date of publication of application: **05.03.2025**
(21) Application number: 23796686.6
(22) Date of filing: 18.04.2023
(51) Int. Cl.: H04L 5/14, H04L 5/00, H04W 72/04, H04W 72/23

(54) **METHOD AND DEVICE FOR RESOURCE ALLOCATION IN WIRELESS COMMUNICATION SYSTEM**

(30) Priority: 28.04.2022 KR 20220053070
(71) Applicant: LG Electronics Inc., Yeongdeungpo-gu Seoul 07336 (KR)
(72) Inventor: BAN, Choongsang, Seoul 06772 (KR); YOU, Hyangsun, Seoul 06772 (KR); KIM, Kijun, Seoul 06772 (KR); KO, Hyunsoo, Seoul 06772 (KR); YANG, Suckchel, Seoul 06772 (KR); SHIM, Jaenam, Seoul 06772 (KR)
(74) Representative: Frenkel, Matthias Alexander
(86) International application number: PCT/KR2023/005219
(87) International publication number: WO 2023/211037

(57) **Abstract**

According to various embodiments of the present disclosure, provided is a method performed by an electronic device comprising a first device and a second device in a wireless communication system. The method may comprise: a step in which the first device receives first semi-static time division duplex (TDD) resource allocation information including a plurality of first flexible resources not allocated to uplink (UL) or downlink (DL) from a base station; a step in which the first device receives TDD UL-DL additional configuration information from the base station; a step in which the second device determines second semi-static TDD resource allocation information by updating one or more of the plurality of first flexible resources in the first semi-static TDD resource allocation information based on the TDD UL-DL additional configuration information; and a step in which the second device forwards a signal from the base station to a user equipment (UE), or forwards a signal from the UE to the base station based on the second semi-static TDD resource allocation information.

## Description

### [TECHNICAL FIELD]

The present disclosure relates to a wireless communication system. More particularly, the present disclosure relates to a method and device for resource allocation in a wireless communication system.

### [BACKGROUND]

Wireless communication systems have been widely deployed to provide various types of communication services such as voice or data. In general, the wireless communication system is a multiple access system capable of supporting communication with multiple users by sharing available system resources (bandwidth, transmission power, etc.). Examples of multiple access systems include a Code Division Multiple Access (CDMA) system, a Frequency Division Multiple Access (FDMA) system, a Time Division Multiple Access (TDMA) system, an Orthogonal Frequency Division Multiple Access (OFDMA) system, and a Single Carrier Frequency Division Multiple Access (SC-FDMA) system.

In particular, as many communication devices require large communication capacity, more enhanced mobile broadband (eMBB) communication technology than the existing radio access technology (RAT) is proposed. Not only massive machine type communications (mMTC) which provide various services anytime and anywhere by connecting a large number of devices and objects, but also a communication system considering service/user equipment (UE) sensitive to reliability and latency are proposed. Various technical configurations for this are proposed.

### [DISCLOSURE]

### [TECHNICAL PROBLEM]

In order to solve the above-described problem, the present disclosure provides a method and a device for resource allocation in a wireless communication system.

In order to solve the above-described problem, the present disclosure provides a method for judging/determining DL/UL information in a semi-static TDD flexible resource of an RU based on dynamic TDD DL/UL information of an MT.

In order to solve the above-described problem, the present disclosure provides a method for judging/determining the DL/UL information in the semi-static TDD flexible resource of the RU when the dynamic TDD DL/UL information of the MT is not configured/indicated.

The technical objects to be achieved by the present disclosure are not limited to those that have been described hereinabove merely by way of example, and other technical objects that are not mentioned can be clearly understood by those skilled in the art, to which the present disclosure pertains, from the following descriptions.

### [TECHNICAL SOLUTION]

In an operating method of an electronic device in a wireless communication device according to an embodiment of the present disclosure, the electronic device includes a first device and a second device, and the method may comprises receiving, by the first device, first semi-static time division duplex (TDD) resource allocation information including a plurality of first flexible resources not allocated to uplink (UL) or downlink (DL) from a base station, receiving, by the first device, TDD UL-DL additional configuration information from the base station, determining, by the second device, second semi-static TDD resource allocation information by updating one or more of the plurality of first flexible resources in the first semi-static TDD resource allocation information based on the TDD UL-DL additional configuration information, and forwarding, by the second device, a signal from the base station to a user equipment (UE), or forwarding a signal from the UE to the base station, based on the second semi-static TDD resource allocation information.

The TDD UL-DL additional configuration information may include dynamic TDD uplink-downlink (UL-DL) configuration information to be applied to the first device. The TDD UL-DL additional configuration information may be received through control information for the first device, or the TDD UL-DL additional configuration information may be received through scheduling information for the first device.

The second semi-static TDD resource allocation information may include information of one or more second flexible resources. The one or more second flexible resources are a propagation delay between UL and DL, and forwarding of a signal by the second device may not be performed in the one or more second flexible resources.

The TDD UL-DL additional configuration information may include dynamic TDD uplink-downlink (UL-DL) configuration information to be applied to the first device. The second semi-static TDD resource allocation information may include information of one or more second flexible resources. The one or more second flexible resources may be a propagation delay between UL and DL, and forwarding of a signal by the second device may not be performed in the one or more second flexible resources.

The second semi-static TDD resource allocation information may be determined by updating one or more of the plurality of first flexible resources in the first semi-static TDD resource allocation information to be identical to one or more resources in the TDD UL-DL additional configuration information.

A resource not corresponding to the TDD UL-DL additional configuration information among the plurality of first flexible resources may be maintained as a second flexible resource in the second semi-static TDD resource allocation information.

The TDD UL-DL additional configuration information may include only UL or DL information for a specific symbol included in a specific slot among the plurality of first flexible resources. Based on that the specific symbol is UL, the second semi-static TDD resource allocation information may be determined by updating all first flexible resources included in the specific slot among the plurality of first flexible resources to UL. Based on that the specific symbol is DL, the second semi-static TDD resource allocation information may be determined by updating all first flexible resources included in the specific slot among the plurality of first flexible resources to DL.

The TDD UL-DL additional configuration information may include UL or DL information for a first symbol included in a first slot among the plurality of first flexible resources and UL or DL information for a second symbol included in a second slot adjacent to the first slot among the first flexible resources. Based on that the first symbol and the second symbol are UL, the second semi-static TDD resource allocation information may be determined by updating all first flexible resources between the first symbol and the second symbol to UL. Based on that the first symbol and the second symbol are DL, the second semi-static TDD resource allocation information may be determined by updating all first flexible resources between the first symbol and the second symbol to DL.

Based on that the second semi-static TDD resource allocation information to be applied to the second device is different from third semi-static TDD resource allocation information to be applied to the first device, transmission and reception of a signal by the first device and transmission and reception of a signal by the second device may be performed based on the third semi-static TDD resource allocation information.

Based on that the second semi-static TDD resource allocation information to be applied to the second device is different from third semi-static TDD resource allocation information to be applied to the first device, the transmission and reception of the signal by the first device and the transmission and reception of the signal by the second device may be performed based on the second semi-static TDD resource allocation information.

An operating method of a base station in a wireless communication system according to an embodiment of the present disclosure may comprise transmitting, to a first device of an electronic device including the first device and a second device, first semi-static time division duplex (TDD) resource allocation information including a plurality of first flexible resources not allocated to uplink (UL) or downlink (DL), transmitting TDD UL-DL additional configuration information to the first device, and receiving a signal from a user equipment (UE), which is forwarded from the second device, based on second semi-static TDD resource allocation information, or transmitting a signal to be forwarded to the UE to the second device, wherein the second semi-static TDD resource allocation information may be information acquired by updating one or more of the plurality of first flexible resources in the first semi-static TDD resource allocation information based on the TDD UL-DL additional configuration information.

The TDD UL-DL additional configuration information may include dynamic TDD uplink-downlink (UL-DL) configuration information to be applied to the first device. The TDD UL-DL additional configuration information may be received through control information for the first device, or the TDD UL-DL additional configuration information may be received through scheduling information for the first device.

The second semi-static TDD resource allocation information may include information of one or more second flexible resources. The one or more second flexible resources may be a propagation delay between UL and DL, and forwarding of a signal by the second device may not be performed in the one or more second flexible resources.

The second semi-static TDD resource allocation information may be determined by updating one or more of the plurality of first flexible resources in the first semi-static TDD resource allocation information to be identical to one or more resources in the TDD UL-DL additional configuration information.

A resource not corresponding to the TDD UL-DL additional configuration information among the plurality of first flexible resources may be maintained as a second flexible resource in the second semi-static TDD resource allocation information.

The TDD UL-DL additional configuration information may include only UL or DL information for a specific symbol included in a specific slot among the plurality of first flexible resources. Based on that the specific symbol is UL, the second semi-static TDD resource allocation information may be determined by updating all first flexible resources included in the specific slot among the plurality of first flexible resources to UL. Based on that the specific symbol is DL, the second semi-static TDD resource allocation information may be determined by updating all first flexible resources included in the specific slot among the plurality of first flexible resources to DL.

An electronic device in a communication system according to an embodiment of the present disclosure may comprise a first device including a first transceiver, a second device including a first transceiver, at least one processor, and at least one memory operably connectable to the at least one processor, and storing instructions of performing operations based on being executed by the at least one processor, wherein the operations may include all steps of the method of any one of claims 1 to 10.

A base station in a communication system according to an embodiment of the present disclosure may comprise a transceiver, at least one processor, and at least one memory operably connectable to the at least one processor, and storing instructions of performing operations based on being executed by the at least one processor.

The operations may include all steps of the method of any one of claims 11 to 16.

A control device controlling an electronic device in a communication system according to an embodiment of the present disclosure may comprise at least one processor and at least one memory operably accessing the at least one processor, wherein the at least one memory may store instructions for performing operations based on being executed by the at least one processor, and the operations may include all steps of the method of any one of claims 1 to 10.

In one or more non-transitory computer readable media storing one or more instructions according to an embodiment of the present disclosure, the one or more instructions may perform operations based on being executed by one or more processors, and the operations may include all steps of the method of any one of claims 1 to 10.

### [Advantageous Effects]

In order to solve the above-described problem, the present disclosure provides a method and a device for resource allocation in a wireless communication system.

According to the present disclosure, when a dynamic TDD DL/UL allocation scheme is used within the coverage of NCR, adaptive beam operation and efficient interference management are possible.

According to the present disclosure, a propagation delay between RU-UE links can be compensated by RU turning off the semi-static TDD flexible resources of the MT.

According to the present disclosure, the propagation delay between the RU-UE links can be compensated by turning off the dynamic TDD flexible resources of the MT by the RU.

According to the present disclosure, the propagation delay between the RU-UE links can be compensated by turning off resources that are not scheduled as separate DL/UL of the MT by the RU.

According to the present disclosure, even if the dynamic TDD DL/UL information of the MT is not configured/indicated, the RU can judge/determine the DL/UL information in the semi-static TDD flexible resource.

### [BRIEF DESCRIPTION OF THE DRAWINGS]

The accompanying drawings, which are included to provide a further understanding of the present disclosure and constitute a part of the detailed description, illustrate embodiments of the present disclosure and serve to explain technical features of the present disclosure together with the description. Technical features of the present disclosure are not limited to specific drawings, and features disclosed in each drawing can be combined with each other to form a new embodiment. Reference numerals in each drawing may denote structural elements.
FIG. 1 illustrates an example of physical channels and general signal transmission used in the 3GPP system.
FIG. 2 illustrates an example of a structure of a radio frame used in NR.
FIG. 3 illustrates an example of a slot structure of an NR frame.
FIG. 4 illustrates an example of a self-contained slot.
FIGS. 5 to 8 illustrate an example of transmission network architecture for 5G.
FIG. 9 illustrates an example of a topology in which an NCR performs transmission and reception between a base station and a UE.
FIG. 10 illustrates an example of a beamforming operation of an existing RF repeater.
FIG. 11 illustrates an example of a beamforming operation of an NCR.
FIG. 12 is a flowchart for a signal transmission/reception method according to an embodiment of the present disclosure.
FIG. 13 is a flowchart of a signal transmission/reception method according to another embodiment of the present disclosure.
FIG. 14 illustrates a communication system applied to various embodiments of the present disclosure.
FIG. 15 illustrates wireless devices applicable to various embodiments of the present disclosure.
FIG. 16 illustrates another example of wireless devices applicable to various embodiments of the present disclosure.
FIG. 17 illustrates a signal processing circuit for a transmission signal.
FIG. 18 illustrates an example of a wireless communication device applicable to the present disclosure.

### [DETAILED DESCRIPTION]

In various embodiments of the present disclosure, "A or B" may mean "only A," "only B" or "both A and B." In other words, in various embodiments of the present disclosure, "A or B" may be interpreted as "A and/or B." For example, in various embodiments of the present disclosure, "A, B or C" may mean "only A," "only B," "only C" or "any combination of A, B and C."

A slash (/) or comma used in various embodiments of the present disclosure may mean "and/or." For example, "A/B" may mean "A and/or B." Hence, "A/B" may mean "only A," "only B" or "both A and B." For example, "A, B, C" may mean "A, B, or C."

In various embodiments of the present disclosure, "at least one of A and B" may mean "only A," "only B" or "both A and B." In addition, in various embodiments of the present disclosure, the expression of "at least one of A or B" or "at least one of A and/or B" may be interpreted in the same meaning as "at least one of A and B."

Further, in various embodiments of the present disclosure, "at least one of A, B, and C" may mean "only A," "only B," "only C" or "any combination of A, B and C." In addition, "at least one of A, B or C" or "at least one of A, B and/or C" may mean "at least one of A, B, and C."

Further, parentheses used in various embodiments of the present disclosure may mean "for example." Specifically, when "control information (PDCCH)" is described, "PDCCH" may be proposed as an example of "control information." In other words, "control information" in various embodiments of the present disclosure is not limited to "PDCCH," and "PDDCH" may be proposed as an example of "control information." In addition, even when "control information (i.e., PDCCH)" is described, "PDCCH" may be proposed as an example of "control information."

Technical features described individually in one drawing in various embodiments of the present disclosure may be implemented individually or simultaneously.

The following technologies can be applied to various wireless access systems such as code division multiple access (CDMA), frequency division multiple access (FDMA), time division multiple access (TDMA), orthogonal frequency division multiple access (OFDMA), or single carrier-frequency division multiple access (SC-FDMA). The CDMA may be implemented as radio technology such as Universal Terrestrial Radio Access (UTRA) or CDMA2000. The TDMA may be implemented as radio technology such as a global system for mobile communications (GSM)/general packet radio service (GPRS)/enhanced data rates for GSM evolution (EDGE). The OFDMA may be implemented as radio technology such as Institute of Electrical and Electronics Engineers (IEEE) 802.11 (Wi-Fi), IEEE 802.16 (WiMAX), IEEE 802.20, Evolved UTRA (E-UTRA), or the like. The UTRA is a part of Universal Mobile Telecommunications System (UMTS). 3rd Generation Partnership Project (3GPP) Long Term Evolution (LTE) is a part of Evolved UMTS (E-UMTS) using the E-UTRA and LTE-Advanced (A)/LTE-A pro is an evolved version of the 3GPP LTE. 3GPP NR (New Radio or New Radio Access Technology) is an evolved version of the 3GPP LTE/LTE-A/LTE-A pro.

For clarity of description, the technical spirit of the present disclosure is described based on the 3GPP communication system (e.g., LTE or NR etc), but the technical spirit of the disclosure is not limited thereto. LTE means technology after 3GPP TS 36.xxx Release 8. In detail, LTE technology after 3GPP TS 36.xxx Release 10 is referred to as the LTE-A and LTE technology after 3GPP TS 36.xxx Release 13 is referred to as the LTE-A pro. The 3GPP NR means technology after TS 38.xxx Release 15. The 3GPP 6G may mean technology after TS Release 17 and/or Release 18. "xxx" denotes a detailed standard document number. The LTE/NR/6G may be collectively referred to as the 3GPP system. For background art, terms, abbreviations, etc. used in the present disclosure, reference can be made to items described in standard documents published prior to the present disclosure. For example, the following document may be referred to.

### 3GPP LTE

- 36.101: User Equipment (UE) radio transmission and reception
- 36.211: Physical channels and modulation
- 36.212: Multiplexing and channel coding
- 36.213: Physical layer procedures
- 36.214: Physical layer Measurements
- 36.321: Medium Access Control (MAC) protocol specification
- 36.331: Radio Resource Control (RRC)
- 37.213: Physical layer procedures for shared spectrum channel access

### 3GPP NR

- 38.101-1: Part 1: Range 1 Standalone
- 38.101-2: Part 2: Range 2 Standalone
- 38.101-2: Part 3: Range 1 and Range 2 Interworking operation with other radios
- 38.211: Physical channels and modulation
- 38.212: Multiplexing and channel coding
- 38.213: Physical layer procedures
- 38.214: Physical layer Measurements
- 38.215: Physical layer measurements
- 38.321: Medium Access Control (MAC) protocol specification
- 38.331: Radio Resource Control (RRC)

For the purpose of explaining the present disclosure, terms not defined above are as follows.

IAB-node: RAN node that supports wireless access to UEs and wirelessly backhauls the access traffic.

IAB-donor: RAN node that provides UE's interface to core network and wireless backhauling functionality to IAB nodes.

Abbreviations used in the present disclosure may be defined as follows.
IAB: Integrated Access and Backhaul
CSI-RS: Channel State Information Reference Signal
DgNB: Donor gNB
AC: Access
BH: Backhaul
FH: Fronthaul
CU: Centralized Unit
DU: Distributed Unit
RU: Remote Unit
MT: Mobile terminal
CU: Centralized Unit
IAB-MT: IAB mobile terminal
NGC: Next-Generation Core network
SA: Stand-alone
NSA: non-stand-alone
EPC: Evolved Packet Core

### Physical Channel and Frame Structure

### Physical Channel and General Signal Transmission

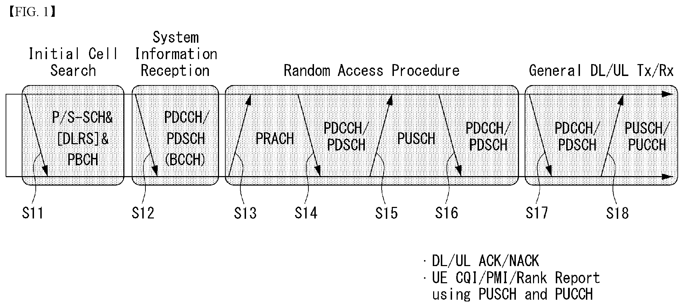

FIG. 1 illustrates an example of physical channels and general signal transmission used in the 3GPP system.

In a wireless communication system, the UE receives information from the eNB through downlink (DL) and the UE transmits information from the eNB through Uplink (UL). The information which the eNB and the UE transmit and receive includes data and various control information and there are various physical channels according to a type/use of the information which the eNB and the UE transmit and receive.

When the UE is powered on or newly enters a cell, the UE performs an initial cell search operation such as synchronizing with the eNB (S11). To this end, the UE may receive a primary synchronization signal (PSS) and a (secondary synchronization signal (SSS) from the eNB and synchronize with the eNB and acquire information such as a cell ID or the like. Thereafter, the UE may receive a physical broadcast channel (PBCH) from the eNB and acquire in-cell broadcast information. The UE receives a downlink reference signal (DL RS) in an initial cell search step to check a downlink channel status.

A UE that completes the initial cell search receives a Physical Downlink Control Channel (PDCCH) and a Physical Downlink Control Channel (PDSCH) according to information loaded on the PDCCH to acquire more specific system information (S12).

When there is no radio resource first accessing the eNB or for signal transmission, the UE may perform a Random Access Procedure (RACH) to the eNB (S13 to S16). To this end, the UE may transmit a specific sequence to a preamble through a Physical Random Access Channel (PRACH) (S13 and S15) and receive a response message (Random Access Response (RAR) message) for the preamble through the PDCCH and a corresponding PDSCH. In the case of a contention based RACH, a Contention Resolution Procedure may be additionally performed (S16).

The UE that performs the above procedure may then perform PDCCH/PDSCH reception (S17) and Physical Uplink Shared Channel (PUSCH)/Physical Uplink Control Channel (PUCCH) transmission (S18) as a general uplink/downlink signal transmission procedure. Control information that the UE transmits to the base station may be referred to as uplink control information (UCI). The UCI may include hybrid automatic repeat and request (HARQ) acknowledgement/negative ACK (ACK/NACK), scheduling request (SR), channel state information (CSI), etc. The CSI may include a channel quality indication (CQI), a precoding matrix indicator (PMI), a rank indicator (RI), etc. The UCI may be generally transmitted on the PUCCH, but if control information and data need to be transmitted at the same time, the UCI may be transmitted on the PUSCH. The UE may aperiodically transmit the UCI to the base station on the PUSCH based on a request/indication of the network.

New radio access technology (new RAT, NR) is described below.

As more and more communication devices require larger communication capacity, there is a need for enhanced mobile broadband communication compared to the existing radio access technology (RAT). Massive machine type communications (MTC) which provide various services anytime and anywhere by connecting many devices and objects are also one of the major issues to be considered in next-generation communications. In addition, a communication system design considering a service/UE sensitive to reliability and latency is also being discussed. As above, the introduction of next generation RAT considering enhanced mobile broadband communication, massive MTC, ultra-reliable and low latency communication (URLLC), etc. is discussed, and the technology is called new RAT or NR for convenience in various embodiments of the present disclosure.

### Orthogonal Frequency Division Multiplexing (OFDM) Numerology

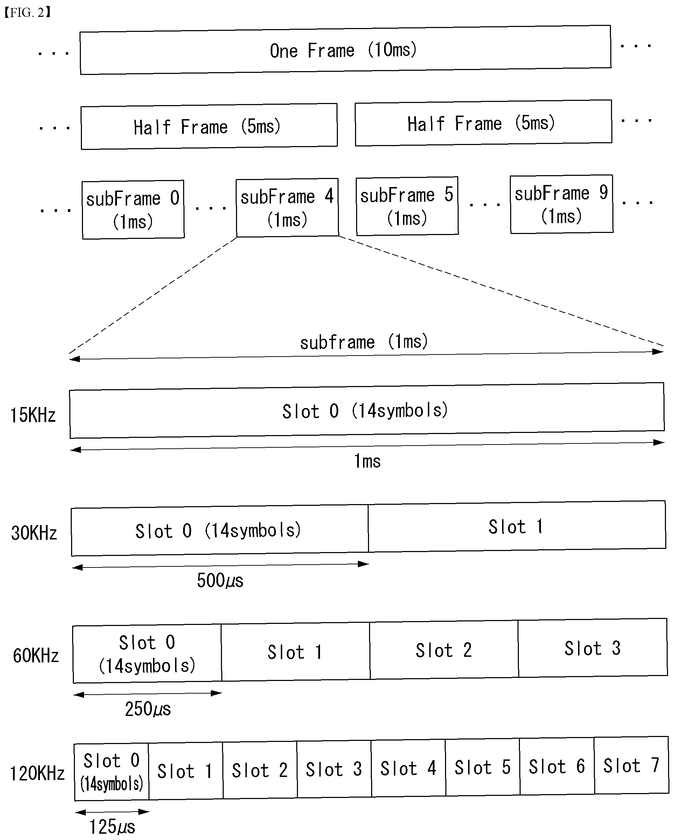

FIG. 2 illustrates an example of a structure of a radio frame used in NR.

A new radio access technology (RAT) system uses an OFDM transmission scheme or a similar transmission scheme thereto. The new RAT system may follow different OFDM parameters from OFDM parameters of LTE. Alternatively, the new RAT system may follow numerology of existing LTE/LTE-A as it is but have a larger system bandwidth (e.g., 100 MHz). Alternatively, one cell may support a plurality of numerologies. In other words, UEs that operate with different numerologies may coexist in one cell.

Referring to FIG. 2, in NR, uplink and downlink transmission consists of frames. A radio frame has a length of 10 ms and is defined as two 5 ms half-frames (HFs). The half-frame is defined as five 1 ms subframes (SFs). The subframe is split into one or more slots, and the number of slots in the subframe depends on a subcarrier spacing (SCS). Each slot includes 12 or 14 OFDM(A) symbols depending on a cyclic prefix (CP). When a normal CP is used, each slot includes 14 symbols. When an extended CP is used, each slot includes 12 symbols. The symbol may include an OFDM symbol (or CP-OFDM symbol) and an SC-FDMA symbol (or DFT-s-OFDM symbol).

Table 1 shows that when the normal CP is used, the number of symbols per slot, the number of slots per frame, and the number of slots per subframe vary depending on the SCS.

**[Table 1]**

| SCS (15*2^{u}) | N^{slot}_{syrnb} | N^{frame,u}ₛₗₒₜ | N^{subframe,u}ₛₗₒₜ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

In Table 1, N^{slot}_{symb} is the number of symbols in the slot, N^{frame,u}ₛₗₒₜ is the number of slots in the frame, and N^{subftame,u}ₛₗₒₜ is the number of slots in the subframe.

Table 2 shows that when the extended CP is used, the number of symbols per slot, the number of slots per frame, and the number of slots per subframe vary depending on the SCS.

**[Table 2]**

| SCS (15*2^{u}) | N^{slot}_{symb} | N^{frame,u}ₛₗₒₜ | N^{subframe,u}ₛₗₒₜ |
|---|---|---|---|
| 60KHz (u=2) | 12 | 40 | 4 |

NR supports multiple numerologies (or subcarrier spacing (SCS)) for supporting diverse 5^{th} generation (5G) services. For example, if the SCS is 15 kHz, the NR supports a wide area in conventional cellular bands; if the SCS is 30 kHz/60 kHz, the NR supports a dense-urban, lower latency and wider carrier bandwidth; and if the SCS is 60 kHz or higher, the NR supports a bandwidth greater than 24.25 GHz in order to overcome phase noise.

An NR frequency band may be defined as two types of frequency ranges FR1 and FR2. Values of frequency ranges may be changed. For example, the two types of frequency ranges FR1 and FR2 may be defined as in Table 3 below.

**[Table 3]**

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

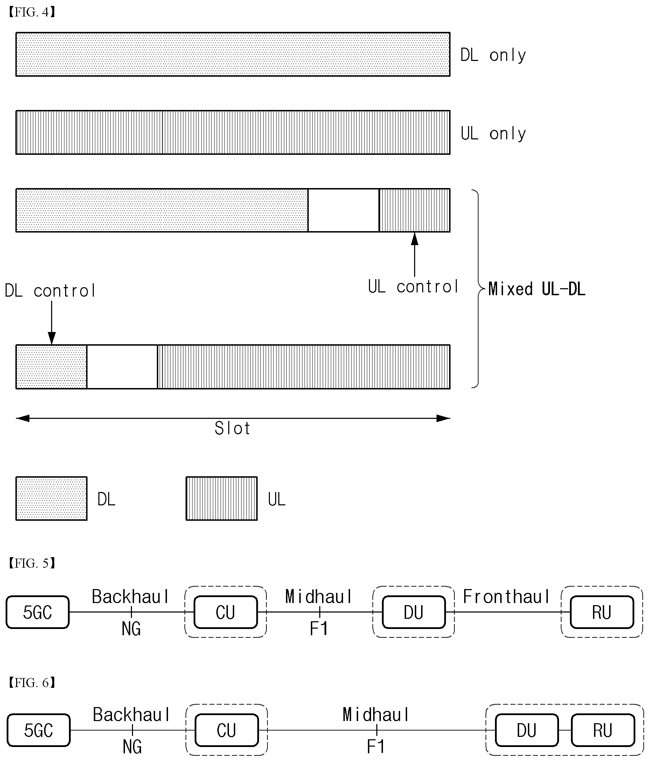

For convenience of explanation, FR1 among the frequency ranges used in the NR system may mean "sub 6 GHz range", and FR2 may mean "above 6 GHz range" and may call millimeter wave (mmW). As described above, values of the frequency range of the NR system may be changed. For example, FR1 may include a range of 410 MHz to 7125 MHz as shown in FIG. 4 below.

**[Table 4]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Referring to FIG. 4, FR1 may include a frequency band of 6 GHz (or 5850, 5900, 5925 MHz, etc.) or higher. For example, the frequency band of 6 GHz (or 5850, 5900, 5925 MHz, etc.) or higher included in FR1 may include an unlicensed band. The unlicensed band may be used for diverse purposes, for example, used for communication for vehicles (e.g., self-driving). In the NR system, OFDM(A) numerology (e.g., SCS, CP length, etc.) may be differently configured between a plurality of cells merged into one UE. Hence, an (absolute time) duration of a time resource (e.g., subframe (SF), slot or transmission time interval (TTI)) (for convenience, collectively referred to as a time unit (TU)) consisting of the same number of symbols may be configured differently between the merged cells.

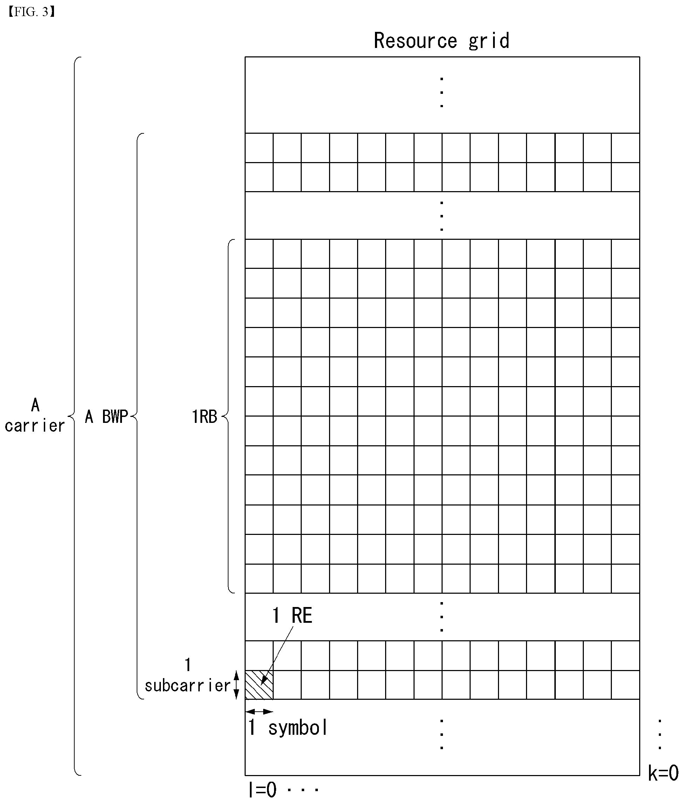

FIG. 3 illustrates an example of a slot structure of an NR frame.

Referring to FIG. 3, a slot includes a plurality of symbols in a time domain. For example, one slot includes seven symbols in a normal CP, while one slot includes six symbols in an extended CP. A carrier includes a plurality of subcarriers in a frequency domain. A resource block (RB) is defined as a plurality of (e.g., 12) consecutive subcarriers in the frequency domain. A bandwidth part (BWP) is defined as a plurality of consecutive (P)RBs in the frequency domain and may correspond to one numerology (e.g., SCS, CP length, etc.). The carrier may include up to N (e.g., five) BWPs. The data communication may be performed through an activated BWP, and only one BWP may be activated in one UE. In a resource grid, each element is referred to as a resource element (RE), and one complex symbol may be mapped to each RE.

FIG. 4 illustrates an example of a self-contained slot.

In the NR system, a frame is characterized by a self-contained structure in which all of a DL control channel, DL or UL data, and an UL control channel can be included in one slot. For example, the first N symbols in the slot may be used to transmit the DL control channel (hereinafter, referred to as a DL control region), and the last M symbols in the slot may be used to transmit the UL control channel (hereinafter, referred to as an UL control region), where N and M are an integer greater than or equal to 0. A resource region (hereinafter, referred to as a data region) between the DL control region and the UL control region may be used for DL data transmission or UL data transmission. For example, the following configuration may be considered. Each duration is listed in chronological order.
1. DL only configuration
2. UL only configuration
3. Mixed UL-DL configuration
   - DL region + Guard Period (GP) + UL control region
   - DL control region + GP + UL region

   * DL region: (i) DL data region, (ii) DL control region + DL data region
   * UL region: (i) UL data region, (ii) UL data region + UL control region

The PDCCH may be transmitted in the DL control region, and the PDSCH may be transmitted in the DL data region. The PUCCH may be transmitted in the UL control region, and the PUSCH may be transmitted in the UL data region. On the PDCCH, downlink control information (DCI), for example, DL data scheduling information, UL data scheduling information, etc., may be transmitted. On the PUCCH, uplink control information (UCI), for example, positive acknowledgement/negative acknowledgement (ACK/NACK) information, channel state information (CSI), scheduling request (SR), etc., for DL data may be transmitted. The GP provides a time gap in a process of switching the base station and the UE from a transmission mode to a reception mode or a process of switching from the reception mode to the transmission mode. Some symbols at time at which DL is switched to UL in the subframe may be configured as the GP.

FIGS. 5 to 8 illustrate an example of transmission network architecture for 5G.

Referring to FIG. 5, ITU-T (Telecommunication Standardization Sector) has adopted slightly different 5G transmission network architecture consisting of three logical elements of a control unit (CU), a distributed unit (DU) and a radio unit (RU). In this model, functions of a mid-layer and a lower layer are split as the DU and the RU. Based on the functional split between the DU and the RU, the RU implements a radio frequency (RF) functionality, and if possible, also implements a low-PHY functionality and a high-PHY functionality.

Referring to FIGS. 6 to 8, CUs, DUs, and RUs may be grouped in different combinations to form actual physical network elements based on network requirements. This may provide flexibility to accommodate various network architectures, applications, and transmission network requirements.

As illustrated in FIGS. 5 to 8, a transmission network between the 5th generation core network (5GC) and the CU is referred to as backhaul, and a backhaul network implements a 3GPP next generation (NG) interface. In the same manner, a transmission network between the CU and the DU is referred to as midhaul, and a midhaul network implements a 3GPP F1 interface. Finally, a transmission network between the DU and the RU is referred to as fronthaul. The backhaul, the midhaul, and the fronthaul are generally referred to as xhaul.

### Reconfigurable Intelligent Surface (RIS)

An RIS may be used to control the propagation of electromagnetic waves by changing electrical and magnetic properties of the electromagnetic waves on the surface. The RIS is also known as an intelligent reflecting surface (IRS) and a large intelligent surface (LIS) and may have a programmable structure. The RIS may be used to sense a wireless environment by integrating sensing functions, in addition to controlling the propagation of the electromagnetic waves. The properties of wireless channels can be controlled at least partially by deploying the RIS in an environment in which a wireless system operates.

The functionality of the RIS can provide many advantages, including the possibility of improving stability and coverage performance through beamforming or range extension. The ability to control a propagation environment has somewhat changed the existing wireless system design paradigm in which wireless channels were always considered as uncontrollable entities that distorted the transmitted signal. Thus, a transmitter (TX) and a receiver (RX) have been traditionally designed to equalize an effect of the channel. There are various expected scenarios, for example, a single RIS being deployed on a wall to indicate a signal coming from a predetermined direction.

The use of the RIS can provide a 'transmission effect' of a gNB signal that allows external signal to be transmitted into the building, and a coverage for a shaded area can be improved by providing a 'reflection effect' of an NLoS environment.

### Network-Controlled Repeater (NCR) of NR

### Existing RF Repeater

An RF repeater is a non-regenerative relay node that simply amplifies and forwards everything it receives. The main advantages of the RF repeaters are their low cost, ease of deployment, and not increasing latency. The main disadvantage of the RF repeaters is that they can amplify signals and noise to contribute to an increase in interference (contamination) of the system.

### Release (Rel)-17 Work Item (WI) of RF Repeater (RAN4)

The RF repeater is specified in Rel-17 of RAN4 for a frequency range 1 (FR1) frequency division duplex (FDD)/time division duplex (TDD) and a frequency range 2 (FR2) band. The Rel-17 WID contains only RF requirements. The RAN4 work item description (WID) (RP-210818) specifies that it is assumed that the RF repeater does not perform adaptive beamforming toward a UE.

### NCR for Rel-18 NR

Coverage is a basic aspect of cellular network deployment. When deployed, mobile operators rely on various types of network nodes to provide blanket coverage. The deployment of regular full-stack cells is one option but is not always possible (e.g., without backhaul availability) or is not always economically viable.

As a result, a new type of network node has been considered to increase the network deployment flexibility of the mobile operator. For example, integrated access and backhaul (IAB) has been introduced in Rel-16 and enhanced in Rel-17 to a new type of network node that does not require wired backhaul. Another type of network node is an RF repeater that simply amplifies and forwards all signals it receives. The RF repeaters have been widely deployed to complement the coverage provided by regular full-stack cells in 2G, 3G and 4G. In Rel-17, RAN4 has specified RF and electromagnetic compatibility (EMC) requirements for RF repeaters for NR targeting both FR1 and FR2.

The RF repeaters provide a cost-effective means of extending network coverage. However, the RF repeaters have limitations in simply performing amplification and forwarding operations without considering various factors that can improve performance. These factors may include information on semi-static and/or dynamic downlink/uplink configurations, adaptive transmitter/receiver spatial beamforming, ON-OFF states, and the like.

Compared to the existing RF repeater, the NCR improves a function of receiving and processing side control information. The side control information enables a network control repeater to perform amplification and forwarding operations in a more efficient manner. Potential advantages may include mitigation of unnecessary noise amplification, better spatial directivity transmission and reception, and simplified network integration.

The study of NCR for NR focuses on the following scenarios and assumptions. The NCR is an in-band RF repeater used to extend a network range in the FR1 and FR2 bands, and the FR2 deployment during the study may be prioritized for both outdoor and outdoor to indoor (O2I) scenarios. It corresponds only to a single hop stationary NCR. The NCR is transparent to the UE. The NCR may simultaneously maintain a gNodeB (gNB)-repeater link and a repeater-UE link. Here, cost efficiency is a key consideration for the NCR.

In RAN1, there is a study and identification of whether the following side control information, including a maximum transmission power assumption, is needed for the NCR. That is, there is a study and identification of whether side control information such as beamforming information, timing information for aligning transmission/reception boundaries of the NCR, uplink-downlink TDD configuration information, On-Off information for efficient interference management and energy efficiency enhancement, and power control information (as a second priority) for efficient interference management is needed for the NCR. In addition, the RAN1 has a study and identification of L1/L2 (layer 1/layer 2) signal (including configuration of L1/L2) for transmitting the side control information.

RAN2 and RAN3 have a study on identification and authentication of the NCR. Here, coordination with SA3 may be necessary. The network-controlled repeater (NCR) may consist of an RU and an MT.

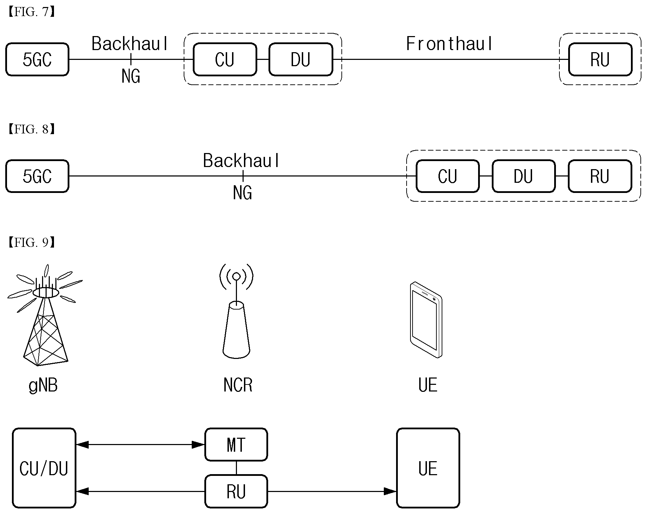

FIG. 9 illustrates an example of a topology in which an NCR performs transmission and reception between gNB and a UE.

In FIG. 9, the gNB may include a CU and/or a DU, and the NCR may be connected to the gNB. The NCR may consist of a mobile terminal (MT) and an RU.

The RU may consist of only an RF layer. The RU may receive a signal sent by the gNB at an RF end and transmit the signal to the UE, and the RU may receive a signal sent by the UE at the RF end and transmit the signal to the gNB. The RU only transmits the signal between the gNB and the UE, but cannot itself generate signal/channel and transmit it to the gNB/UE or receive signal/channel from the gNB/UE and search for it. The RU may consider adjusting the transmit/receive beam direction, downlink/uplink direction, whether it is On/Off, transmit power, etc., at the RF end, in order to transmit the received signal. However, such an operation of the RU cannot be determined by the NCR itself, and may be entirely controlled by the gNB.

The MT may include an RF layer and L1, L2 and/or L3 layers. For example, the MT may include the RF layer and the L1 layer or the L1/L2 layer, or the MT may include the RF layer and the L1/L1/L3 layer. The MT may search/receive the signal/channel transmitted by the gNB, and the MT may generate and transmit the signal/channel transmitted to the gNB. The MT may receive information (i.e., side control information) required to control an operation of the RU from the gNB. The MT does not perform transmission/reception with the UE.

When compared to the existing RF repeater, the NCR can operate as follows.

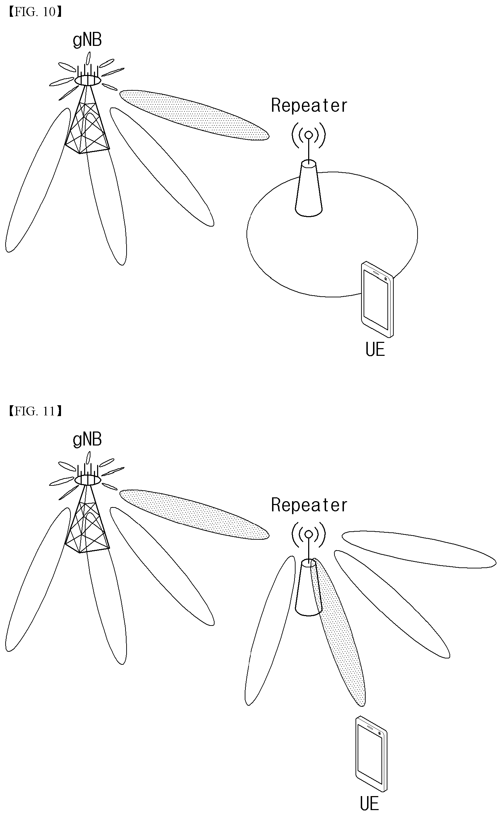

FIG. 10 illustrates an example of a beamforming operation of an existing RF repeater. FIG. 1 1 illustrates an example of a beamforming operation of an NCR.

Referring to FIGS. 10 and 11, the existing RF repeater performs beamforming applying an omni-direction or a fixed direction, as illustrated in FIG. 10. On the other hand, the NCR can obtain a beamforming gain by adaptively adjusting a transmit/receive beam direction of the NCR based on a location of the UE and channel conditions of the UE, as illustrated in FIG. 11.

The existing RF repeater cannot distinguish downlink and uplink directions in a TDD system and always performed simultaneously transmission and reception in the downlink direction and the uplink direction. Alternatively, the existing RF repeater applies only a fixed TDD configuration to perform switching between the downlink direction and the uplink direction in a given time pattern. On the other hand, the NCR may perform downlink/uplink switching in consideration of the TDD configuration. Hence, this enables adaptive downlink/uplink operation and can reduce power waste and interference caused by transmitting unnecessary signals.

The existing RF repeater always amplifies and forwards the power of a received signal regardless of whether the gNB and the UE transmit signals. Hence, this unnecessarily wastes the power and increases the interference to the surroundings. The NCR may perform the On/Off operation to turn off the operation of the RU when there is no signal to transmit to the gNB/UE, thereby not transmitting unnecessary signals.

The existing RF repeater amplified and forwarded the power of the received signal at a fixed ratio. On the other hand, an influence of interference on the surroundings can be reduced by reducing the transmission power of the NCR when the signal is transmitted with unnecessarily large power, thereby reducing, and the signal can be stably transmitted to the receiver by increasing the transmission power of NCR when the signal is transmitted with low power.

The existing RF repeater operates without knowing downlink/uplink slot boundaries. On the other hand, the NCR shall know transmission/reception boundaries of the downlink and uplink in order to adaptively adjust the beamforming, the on/off, the downlink/uplink direction, the transmission power, etc. as described above. Through this, the NCR can differently apply the operation of the RU per unit time (e.g., slot or symbol).

Based on this discussion, the present disclosure proposes a method for NCR to determine/set TDD resource allocation information and a method for receiving instructions from a base station.

This disclosure assumes operation in NCR. However, this disclosure can be applied to devices other than NCR. In particular, the contents of the present invention can be applied to the operation of RIS. To this end, the NCR mentioned in the present invention can be replaced with RIS and extended/interpreted. In this case, the RU can perform the role of forwarding a signal from a gNB to a UE in RIS and the role of forwarding a signal from a UE to a gNB, and the MT can perform the role of receiving side control information for controlling signal transmission of the RU from the gNB. In this disclosure, the network can be replaced with a gNB or a CU/DU and interpreted. In addition, the gNB can be replaced with a network or a CU/DU and interpreted.

The NCR aims to overcome the limitations of an existing radio frequency (RF) repeater that simply amplifies and forwards signals and provide more intelligent RU operation control. For this purpose, the concept of side control information (side control information) is newly introduced in the NCR. By transmitting and receiving side control information between the gNB and the MT, it is possible to partially control the operation of the RU.

However, as the cost-effectiveness of NCR emerges as an important factor, it may be difficult for the MT to have complete control capabilities in the form of a full protocol stack. However, the NCR has an advantage that can be differentiated from the existing RF repeater that is implemented only in that efficient control of the RU utilizing side control information is enabled. Through the development of intelligent motion technologies for NCR, it may be expected to apply techniques that may achieve performance gains at a lower cost.

In the NCR, in order to forward the signal received by the RU, it may be considered to adjust the transmit/receive beam direction, DL/UL direction, on/off, transmission power, etc. at the RF end. However, the operation of the RU may not be determined by the NCR itself and may be entirely controlled by the gNB. To this end, the MT may receive information required to control the operation of the RU (i.e., side control information) from the gNB.

For example, the side control information may include all or some of the following information.

### 1) Beamforming information

Information about the direction of RU's transmit and receive beams
The information may include a beam direction for UL transmission to the gNB, DL reception from the gNB, DL transmission to the UE, and/or UL reception from the UE.

### 2) Timing information to align transmission/reception boundaries of network-controlled repeater

Information for RU to align transmit/receive slots or boundaries

### 3) DL-UL TDD configuration information

Information about DL/UL direction of RU

### 4) ON-OFF information for efficient interference management and improved energy efficiency

Information about on-off operation of RU

### 5) Power control information for efficient interference management

Information about transmit power of RU
This information may include UL transmit power to the gNB and/or DL transmit power to the UE.

In the present disclosure, it is proposed to use the DL/UL information determined by the MT to determine information about the TDD DL/UL direction of the RU. That is, if the MT judges a specific resource as DL (UL), the RU may also judge that the RU operates as DL (UL) on the corresponding resource. For this purpose, a semi-static TDD DL/UL configuration of the MU may be used. That is, if the MT judges that a specific resource is DL(UL) through the semi-static TDD DL/UL configuration of the MT, the RU may also judge that the RU operates as DL(UL) on the corresponding resource.

The semi-static TDD DL/UL configuration of the MT for such judgment may contain only TDD-UL-DL-configurationCommon information or may contain both TDD-UL-DL-configurationCommon information and TDD-UL-DL-configurationDedicated information. For example, if the semi-static TDD DL/UL configuration of the MT includes only the TDD-UL-DL-configurationCommon information, and if the MT judges a specific resource as a specific resource direction (i.e., DL, UL, or Flexible (F)) through the TDD-UL-DL-configurationCommon information, the RU may also determine that the resource has the same resource direction.

When the semi-static TDD DL/UL configuration of the MT used to judge the DL/UL information of the RU includes both the TDD-UL-DL-configurationCommon information and the TDD-UL-DL-configurationDedicated information, if the MT judges a specific time resource as a specific resource direction (i.e., DL, UL, or F) through the TDD-UL-DL-configurationCommon information and the TDD-UL-DL-configurationDedicated information, the RU may also judge to have the same resource direction in the corresponding time resource.

The side control information of the NCR may be transmitted through the carrier/component carrier (CC) of a separately established link for exchanging control information between the gNB and the MT, and the TDD DL/UL information has a feature of being able to be independently configured/indicated to the MT semi-statically/dynamically.

For example, a minimal initial access process may be required between the gNB and the MT to generate a link for exchanging side control information between the gNB and the MT. In this case, in order for the MT to properly perform a beam management procedure, which involves beam sweeping of the synchronization signal/physical broadcast channel (SS/PBCH) block and beam refinement through the channel state information-reference signal (CSI-RS), the semi-static/dynamic TDD DL/UL information of the MT needs to be configured/instructed accordingly. A method for the MT to determine the DL/UL information in the semi-static TDD flexible resource of the RU by appropriately utilizing such dynamic TDD DL/UL information of the MT may be considered.

Accordingly, the present disclosure proposes a method for judging/determining the DL/UL information in the semi-static TDD flexible resource of the RU based on dynamic TDD DL/UL information of the MT. Here, the semi-static TDD flexible resource of the RU may be pre-configured based on the semi-static TDD information (D/F/U) of the MT.

Additional advantages, objects and features of the present disclosure will be set forth in part in the description which follows, and in part will be apparent to those of ordinary skill in the art, or may be learned from the practice of the present disclosure. The objects and other advantages of the present disclosure may be realized and attained by the structures particularly pointed out in the present disclosure and claims as well as in the accompanying drawings.

The configuration, operation and other features of the present disclosure will be understood by the embodiments of the present disclosure described with reference to the accompanying drawings.

Similar to the RF repeater in the related art, the RU does not have an ability to make a decision on his/her own, but it may be possible to efficiently control the RU through newly introduced side control information in the NCR.

One of the link adaptation methods that may be considered with the newly introduced side control information between the gNB and the MT in the NCR is dynamic TDD resource (DL/UL) allocation. This is not possible with the existing RF repeater that only performs amplification and transmission in a fixed time/frequency resource.

In particular, when a dynamic TDD DL/UL allocation scheme is used within the coverage of the NCR, the adaptive beam operation and the efficient interference management are possible.

In the present disclosure, it is proposed that the MT uses the semi-static TDD DL/UL configuration of the MT and also dynamic DL/UL information of the MT to judge the DL/UL direction of the RU. That is, when the MT judges DL/UL direction information in a specific time resource based on dynamic TDD DL/UL information, the RU may also judge to have the same DL/UL direction in the corresponding time resource.

Given that the RU has no control capability, judging the DL/UL information in the semi-static TDD flexible resource of the RU based on the dynamic TDD DL/UL information indicated to the MT may be considered.

Here, the dynamic TDD or dynamic TDD DL/UL information indicated to the MT may be information indicated to the MT via slot format indication (SFI) of DCI format 2_0, and/or may be a resource configured/indicated to the MT to transmit a DL signal/channel or receive a UL signal/channel via the semi-static configuration or dynamic indication.

The present disclosure proposes a method for representing how to judge/determine the DL/UL information in the semi-static TDD flexible resource of the RU based on the dynamic TDD DL/UL information of the MT.

### 5.1 Determining DL/UL information of RU based on slot format information of MT

Proposed is a method for the RU to determine the DL/UL information of the RU based on the slot format information of the MT. Here, the slot format information of MT may mean additional DL/UL-directed information for the semi-static TDD flexible resources of MT. For example, additionally, the DL/UL indicated information may be dynamic TDD DL/UL information indicated to the MT via the SFI of DCI format 2_0 in the semi-static TDD flexible resource of the MT.

Here, a more specific procedure by which dynamic TDD is performed may mean a series of processes in which, when the MT receives SFI indication in DCI format 2_0, which is group common signaling, through the PDCCH for the semi-static TDD flexible resource configured via the TDD-UL-DL-configurationCommon information and/or the TDD-UL-DL-configurationDedicated information of RRC, which is cell-specific and/or UE-specific as described in TS 38.213, TDD D/F/U patterns are determined in the order of slot format # (i.e., TS 38.213 table 11.1. 1.-1), which is a subset of slotFormatCombinations configured in slotFormatCombinationId of RRC corresponding to the SFI-index indicated by the offset of positionInDCI included in a DCI container. In the present disclosure, UE-specific may be MT-specific.

The RU has no separate control capability. Therefore, the RU may judge the DL/UL information of the RU by using the DL/UL information of the MT as it is. Disclosed is a method for determining the DL/UL information of the RU based on the slot format information of the MT.

Alt 1. The RU judges the semi-static TDD flexible resource in the MT as off._

The RU may judge the semi-static TDD flexible resource in the MT as off. Here, the semi-static TDD flexible resource of the MT may be a resource that is not allocated to DL/UL through the TDD-UL-DL-configurationCommon information and/or the TDD-UL-DL-configurationDedicated information of RRC (i.e., a resources configured as semi-static TDD flexible), or a resource that is not indicated by the SFI of DCI format 2_0. Alternatively, there may be a case that the SFI is transmitted but not received by the MT.

Additionally, the RU determining the semi-static TDD flexible resource in the MT as off may mean that the RU is not performing transmission and reception for relay. More specifically, the RU determining the semi-static TDD flexible resource in the MT as off may mean that the RU does not perform any DL operation via the RU on the link from the gNB to the RU and from the RU to the UE, and may mean that the RU does not perform any UL operation via the RU on the link from the UE to the RU and from the RU to the gNB. A propagation delay between RU-UE links may be compensated by judging the semi-static TDD flexible resources of the MT as off by the RU.

### Alt 2. The dynamic TDD information (D/F/U) of the MT is also similarly applied to the RU.

The RU judges the DL/UL information by using the dynamic TDD information (D/F/U) of the MT as it is. That is, when the dynamic TDD information (D/F/U) for a specific slot/symbol of MT is configured/indicated through the SFI of DCI format 2_0, the RU also equally applies the dynamic TDD information (D/F/U) of the MT to the same slot/symbol of RU. In this case, the dynamic TDD information (D/F/U) of the MT may mean that the TDD pattern is determined according to the order of slot format # configured in the subset of slotFormatCombinations set in slotFormatCombinationId of RRC corresponding to the SFI index indicated by the offset of positionInDCI of DCI format 2_0 where (Radio Network Temporary Identifier (SFI-RNTI) scrambling is performed in the semi-static TDD flexible resource of the MT. Alternatively, the dynamic TDD information (D/F/U) may be DL/UL indicated information for a separate slot/symbol for a specific purpose within the semi-static TDD flexible resource of the MT.

The RU has no separate control capability. Therefore, the RU may judge the D/F/U information in the same slot/symbol of the RU by using the dynamic TDD information (D/F/U) of the MT configured/indicated in the slot/symbol in the semi-static TDD flexible resource of the RU as it is.

### Alt 2-1. When the dynamic TDD information (D/F/U) of the MT is the flexible resource, the RU judges the dynamic TDD information (D/F/U) of the MT as off.

For a slots/symbol in which the dynamic TDD information (D/F/U) of the MT is indicated particularly as the flexible resource, the RU judges the dynamic TDD information (D/F/U) of the MT as off in the same slot/symbol.

The dynamic TDD information of the MT being indicated as the flexible resource may mean that the TDD information indicated as SFI of DCI format 2_0 in the semi-static TDD flexible resource of the MT is indicated as flexible, not as DL/UL information.

Additionally, the RU determining the semi-static TDD flexible resource in the MT as off may mean that the RU is not performing transmission and reception for relay. More specifically, the RU determining the semi-static TDD flexible resource in the MT as off may mean that the RU does not perform any DL operation via the RU on the link from the gNB to the RU and from the RU to the UE, and may mean that the RU does not perform any UL operation via the RU on the link from the UE to the RU and from the RU to the gNB. The propagation delay between the RU-UE links may be compensated by turning off the dynamic TDD flexible resources of the MT by the RU.

### 5.2 Determining DL/UL information of RU based on scheduling information of MT

Proposed is a method for judging the DL/UL information of the RU based on scheduling information of the MT by the RU. Here, the scheduling information of the MT may mean a resource defined as DL/UL in the process of configuring transmission/reception for a signal/channel to the MT. That is, the RU may operate by implicitly judging a resource configured/indicated to transmit a DL signal/channel as a DL resource through a semi-static configuration or dynamic indication, and operate by implicitly judging a resource configured/indicated to receive the DL signal/channel as a UL resource.

As such, when the MT implicitly judges DL/UL information through configuration/indication of the DL/UL signal/channel for a specific resource, the RU may also determine that the RU operates in the same DL/UL direction for the corresponding resource.

At this time, the transmission/reception configurations for the signal/channel of the MT may be performed in a slot/symbol in which the semi-static TDD flexible resource of the MT is not separately indicated as DL/UL. A case where the semi-static TDD flexible resource of the MT is not indicated as DL/UL may be a case where the semi-static TDD flexible resource of the MT is not indicated as DL/UL via the SFI in DCI format 2_0 in that flexible slot/symbol or a case where the MT does not receive the SFI.

Proposed is a method for judging the DL/UL information of the RU based on DL/UL defined scheduling information in the process of configuring the transmission/reception for the signal/channel of the MT. Only one of the proposed methods below may be applied, or both methods may be applied simultaneously.

### Alt 1. When the MT is not scheduled as a separate DL/UL, the RU judges the same slot/symbol as off.

The RU judges the same slot/symbol of the RU as off with respect to a slot/symbol in which the MT is not scheduled with separate DL/UL information. Here, the slot/symbol in which the MT is not scheduled with DL/UL information means a case where a final defined resource of the MT is a flexible resource. The RU has no separate control capability. Therefore, the RU judges the same slot/symbol of the RU as off with respect to the slot/symbol defined as the flexible resource in which the MT is not scheduled as the DL/UL information.

Additionally, the RU determining the same slot/symbol as off may mean that the RU is not performing transmission and reception for relay. More specifically, the RU determining the same slot/symbol as off may mean that the RU does not perform any DL operation via the RU on the link from the gNB to the RU and from the RU to the UE, and may mean that the RU does not perform any UL operation via the RU on the link from the UE to the RU and from the RU to the gNB. The propagation delay between the RU-UE links may be compensated by turning off resources that are not scheduled as separate DL/UL of the MT by the RU.

### Alt 2. In the process of configuring, by the MT, the transmission/reception of the signal/channel, the schedule information defined as DL/UL is also equally applied to the RU._

The RU may use the DL/UL information of the slot/symbol judged in the process of configuring, by the MT, the transmission/reception of the signal/channel for the same slot/symbol of the RU. That is, when the MT implicitly judges the DL/UL information through configuration/indication of a DL/UL signal/channel for a specific resource, the RU may also determine that the RU operates in the same DL/UL direction for the corresponding resource.

When the RU uses the DL/UL information judged by the MT in Alt1 and Alt2 described above, the RU will use, at a specific time point, information of the MT at the same time point. That is, DL/UL information which the MT has in slot #n is judged as DL/UL information of the RU in slot #n which is the same time point. At this time, the scheduled DL/UL information which the MT has in slot #n may be information configured/indicated before slot k. Therefore, a condition for the DL/UL information judged by the RU to be valid may be that slot #n-k of the MT, which is an indication/configuration time point for the scheduled DL/UL information existing in slot #n of the MT, should be a criterion.

The reason why the difference in k slots should be the criterion here may be a time boundary mismatch between the MT and the RU. For example, when there is the time boundary mismatch between the MT and the U, there may be a processing time delay (= k) to correct an error. At this time, DL/UL information of slot #n of the MT judged at a time point after slot #n-k may be information that may not be applied to slot #n of the RU. Therefore, in order for the DL/UL information in slot #n judged by the RU to be valid, the DL/UL information in slot #n of the MT must be configured/indicated at least before slot #n-k.

Alternatively, when the RU judges that a D/U operation should be switched at a specific time point, a processing time may be required before the RU actually switches and applies the D/U operation. Additionally, if the DL/UL slot boundaries of the RU are mismatched, a gap time may be required to match timing boundaries. Therefore, even if the RU judges that the D/U operation is switched, it may be difficult for the RU to apply the switching immediately. When the MT judges the D/U operation for a specific time point and the RU also judges that the same D/U information is applied at corresponding time point, the MT must determine the D/U information at a specific time in advance of the corresponding time point by considering the RU's processing time so that the RU may actually apply the D/U information judged at the corresponding time point. By considering this, the following operations are proposed.

When the MT judges the DL/UL information scheduled in slot #n before slot #n-k, the RU may judge the corresponding information as DL/UL information of the RU in slot #n. When the MT judges the DL/UL information scheduled in slot #n after slot #n-k, the RU does not use the corresponding information for DL/UL judgment of the RU.

In this case, the k value may be a fixed value for the DL/UL information judged by the RU to be valid. Alternatively, the k value may be a value set through RRC so that the DL/UL information judged by the RU is valid.

### 5.3 Determining, by MT, DL/UL information of RU in situation where DL/UL information is not indicated by slot format/scheduling

When DL/UL is not configured/indicated for a specific resource of the MT through the proposed methods, the RU may not determine DL/UL information. When separate DL/UL information is configured/indicated in the corresponding resource of the MT, a method for judging, by the RU, the DL/UL information for the corresponding resource is proposed.

The separate DL/UL information being configured/indicated for the specific resource in the MT may mean a case where DL/UL is configured/indicated only for a specific slot/symbol. The DL/UL information for the corresponding resource of the RU may mean the DL/UL information configured/indicated in the specific slot/symbol of the MT.

More specifically, when the RU judges the slot/symbol of the RU based on the DL/UL information configured/indicated for the specific slot/symbol of the MT, a method for judging, by the RU, an adjacent resource of the corresponding slot/symbol is proposed. Here, the adjacent resource may mean an adjacent symbol or adjacent slot within the corresponding slot based on the corresponding slot/symbol.

### Method 1. When a specific symbol within a specific slot is judged as DL/UL, the remaining symbols within the corresponding slot may be implicitly judged.

For DL/UL judgment of the RU, when symbol #n within a specific slot of the RU is judged as DL, the RU may judge symbol #0 to symbol #n, which are the first symbols of the corresponding slot of the RU, as DL. Alternatively, when symbol #n within a specific slot of the RU is judged as UL, the RU may judge symbol #n through the last symbol of that slot of the RU as UL.

### Method 2. For two adjacent slots, when both a specific symbol in one slot and a specific symbol in the other slot are judged as DL or both are judged as UL, all symbols between both symbols may be implicitly judged.

That is, for two adjacent slots of the RU, when symbol #m of the first slot is judged as DL and symbol #n of the second slot is judged as DL, if there is no symbol judged as UL between symbol #m and symbol #n, the RU may judge the symbols between symbol #m and symbol #n as DL. Alternatively, for two adjacent slots of the RU, when symbol #m of the first slot is judged as UL and symbol #n of the second slot is judged as UL, if there is no symbol judged as DL between symbol #m and symbol #n, the RU may judge the symbols between symbol #m and symbol #n to be UL.

### 5.4 Judging DL/UL of RU when final DL/UL information of MT and DL/UL information of RU are different

There may be a case where the DL/UL information of the RU and the DL/UL information finally configured in MT are different. For example, the DL/UL information of the RU received through the side control information and the DL/UL information judged by the MT through the TDD DL/UL configuration may be different. For example, a case where information is different may mean that in the same slot/symbol interval of the MT and the RU, the MT is configured to DL, but RU judges the slot/symbol as UL, or the MT is configured to UL but the RU judges the slot/symbol as DL. That is, there may be a collision case where the DL/UL pattern of the slot judged by the RU is DDDDDDDUUUUUUU, but the DL/UL pattern of the slot finally configured/indicated to the MT is UUUUUUUUDDDDDDD. Proposed is a method for judging, by R, the DL/UL information of the RU in such a collision case.

### Method 1. The DL/UL information of the MT is overridden to the RU, and used.

The RU uses DL/UL information which the corresponding slot/symbol of the MT has with respect to the slot/symbol of the RU where a collision occurs.

### Method 2. The DL/UL information of the RU is applied to the MT.

The MT applies the DL/UL information used for which the corresponding slot/symbol of the RU to the same slot/symbol of the MT with respect to the slot/symbol of the MT where the collision occurs.

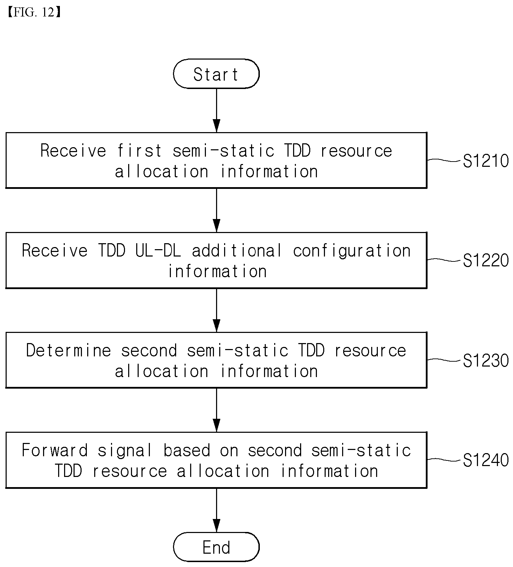

FIG. 12 is a flowchart for a signal transmission/reception method according to an embodiment of the present disclosure.

In FIG. 12, a first device may be the MT described above, and a second device may be the RU described above. Additionally, the first device and the second device may be included in one electronic device (e.g., NCR).

Referring to FIG. 12, the first device may receive first semi-static TDD resource allocation information (S1210). The first device may receive, from a BS, first semi-static TDD resource allocation information including a plurality of first flexible resources that are not allocated to UL or DL.

The first device may receive TDD UL-DL additional configuration information (S1220). The first device may receive the TDD UL-DL additional configuration information from the BS (S1220).

Here, the TDD UL-DL additional configuration information may be dynamic TDD UL-DL configuration information to be applied to the first device. The TDD UL-DL additional configuration information may be received via control information for the first device, or via scheduling information for the first device.

Some of the plurality of first flexible resources received in S1210 may not correspond to the TDD UL-DL additional configuration information, and the remaining some may correspond to the TDD UL-DL additional configuration information.

The TDD UL-DL additional configuration information may include only UL or DL information for a specific symbol included in a specific slot among the plurality of first flexible resources.

The TDD UL-DL additional configuration information may include UL or DL information for a first symbol included in a first slot among the plurality of first flexible resources and UL or DL information for a second symbol included in a second slot adjacent to the first slot among the first flexible resources.

The second device may determine second semi-static TDD resource allocation information (S1230).

The second device can determine the second semi-static TDD resource allocation information by performing an update on one or more of the plurality of first flexible resources in the first semi-static TDD resource allocation information based on the TDD UL-DL additional configuration information.

The second semi-static TDD resource allocation information may include information of one or more second flexible resources. Here, one or more second flexible resources may be propagation delay between UL and DL.

The second semi-static TDD resource allocation information may be determined by updating one or more of the plurality of first flexible resources in the first semi-static TDD resource allocation information to be identical to one or more resources in the TDD UL-DL additional configuration information.

When some of the first flexible resources included in the first semi-static TDD resource allocation information in S1210 do not correspond to the TDD UL-DL additional configuration information received in S1220, the first flexible resources not corresponding to the TDD UL-DL additional configuration information may be maintained as the second flexible resources in the second semi-static TDD resource allocation information.

The TDD UL-DL additional configuration information received in S1220 includes only UL or DL information for a specific symbol included in a specific slot among the plurality of first flexible resources, and when the specific symbol is UL, all of the first flexible resources included in the specific slot among the plurality of first flexible resources are updated to UL, thereby determining the second semi-static TDD resource allocation information, and when the specific symbol is DL, all of the first flexible resources included in the specific slot among the plurality of first flexible resources are updated to DL, thereby determining the second semi-static TDD resource allocation information.

The TDD UL-DL additional configuration information received in S1220 includes UL or DL information for a first symbol included in a first slot among a plurality of first flexible resources and UL or DL information for a second symbol included in a second slot adjacent to the first slot among the first flexible resources, and when the first symbol and the second symbol are UL, all of the first flexible resources between the first symbol and the second symbol among the plurality of first flexible resources are updated to UL, thereby determining the second semi-static TDD resource allocation information, and when the first symbol and the second symbol are DL, all of the first flexible resources between the first symbol and the second symbol among the plurality of first flexible resources are updated to DL, thereby determining the second semi-static TDD resource allocation information.

The second device may forward a signal based on the second semi-static TDD resource allocation information (S1240). The second device may forward the signal from the BS to the UE, or forward the signal from the UE to the BS, based on the second semi-static TDD resource allocation information.

In a case where the second semi-static TDD resource allocation information in S1230 includes information of one or more second flexible resources, the second device may not forward a signal on one or more second flexible resources.

Meanwhile, when the second semi-static TDD resource allocation information to be applied to the second device is different from the third semi-static TDD resource allocation information to be applied to the first device, transmission and reception of a signal by the first device and transmission and reception of a signal by the second device may be performed based on the second semi-static TDD resource allocation information.

In contrast, when the second semi-static TDD resource allocation information to be applied to a third semi-static second device is different from third semi-static TDD resource allocation information to be applied to the first device, the transmission and reception of the signal by the first device and the transmission and reception of the signal by the second device may be performed based on the corresponding TDD resource allocation information.

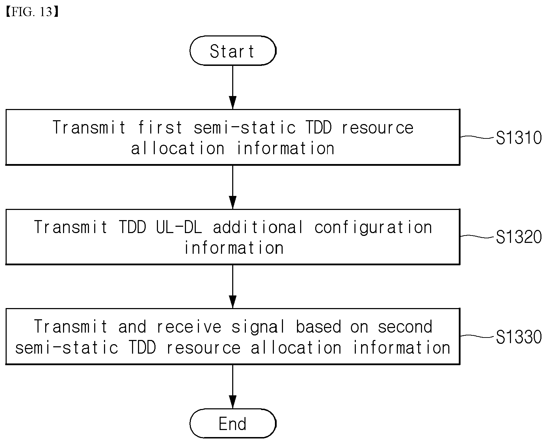

FIG. 13 is a flowchart of a signal transmission/reception method according to another embodiment of the present disclosure.

In FIG. 13, a first device may be the MT described above, and a second device may be the RU described above. Additionally, the first device and the second device may be included in one electronic device (e.g., NCR).

Referring to FIG. 13, the BS may receive first semi-static TDD resource allocation information (S1310). The BS may transmit, to the first device, first semi-static TDD resource allocation information including a plurality of first flexible resources that are not allocated to UL or DL.

The BS may transmit TDD UL-DL additional configuration information (S1320). The BS may transmit the TDD UL-DL additional configuration information to the first device.

Here, the TDD UL-DL additional configuration information may be dynamic TDD UL-DL configuration information to be applied to the first device. The TDD UL-DL additional configuration information may be transmitted via control information for the first device, or via scheduling information for the first device.

Some of the plurality of first flexible resources transmitted in S1310 may not correspond to the TDD UL-DL additional configuration information, and the remaining some may correspond to the TDD UL-DL additional configuration information.

The TDD UL-DL additional configuration information may include only UL or DL information for a specific symbol included in a specific slot among the plurality of first flexible resources transmitted in S1310.

The TDD UL-DL additional configuration information may include UL or DL information for a first symbol included in a first slot among the plurality of first flexible resources received in S1310 and UL or DL information for a second symbol included in a second slot adjacent to the first slot among the first flexible resources.

The BS may transmit and receive a signal based on second semi-static TDD resource allocation information (S1330).

A signal from a user equipment (UE) based on the second semi-static TDD resource allocation information may be received for forwarding from the second device, or a signal to be forwarded to the UE based on the second semi-static TDD resource allocation information may be transmitted to the second device.

The second semi-static TDD resource allocation information may be information acquired by updating one or more of the plurality of first flexible resources in the first semi-static TDD resource allocation information based on the TDD UL-DL additional configuration information.

The second semi-static TDD resource allocation information may include information of one or more second flexible resources, and the one or more second flexible resources may be a propagation delay between UL and DL, and forwarding of the signal by the second device may not be performed in the one or more second flexible resources.

The second semi-static TDD resource allocation information may be determined by updating one or more of the plurality of first flexible resources in the first semi-static TDD resource allocation information to be identical to one or more resources in the TDD UL-DL additional configuration information.

When some of the first flexible resources included in the TDD resource allocation information transmitted in S1310 do not correspond to the TDD UL-DL additional configuration information transmitted in S1320, the first flexible resources not corresponding to the TDD UL-DL additional configuration information may be maintained as the second flexible resources in the second semi-static TDD resource allocation information.

The TDD UL-DL additional configuration information transmitted in S1310 includes only UL or DL information for a specific symbol included in a specific slot among the plurality of first flexible resources, and when the specific symbol is UL, all of the first flexible resources included in the specific slot among the plurality of first flexible resources are updated to UL, thereby determining the second semi-static TDD resource allocation information, and when the specific symbol is DL, all of the first flexible resources included in the specific slot among the plurality of first flexible resources are updated to DL, thereby determining the second semi-static TDD resource allocation information.

The TDD UL-DL additional configuration information transmitted in S1310 includes UL or DL information for a first symbol included in a first slot among a plurality of first flexible resources and UL or DL information for a second symbol included in a second slot adjacent to the first slot among the first flexible resources, and when the first symbol and the second symbol are UL, all of the first flexible resources between the first symbol and the second symbol among the plurality of first flexible resources are updated to UL, thereby determining the second semi-static TDD resource allocation information, and when the first symbol and the second symbol are DL, all of the first flexible resources between the first symbol and the second symbol among the plurality of first flexible resources are updated to DL, thereby determining the second semi-static TDD resource allocation information.

Meanwhile, when the second semi-static TDD resource allocation information to be applied to the second device is different from the third semi-static TDD resource allocation information to be applied to the first device, transmission and reception of a signal by the first device and transmission and reception of a signal by the second device may be performed based on the second semi-static TDD resource allocation information.

In contrast, when the second semi-static TDD resource allocation information to be applied to a third semi-static second device is different from third semi-static TDD resource allocation information to be applied to the first device, the transmission and reception of the signal by the first device and the transmission and reception of the signal by the second device may be performed based on the corresponding TDD resource allocation information.

### Communication system applicable to the present disclosure

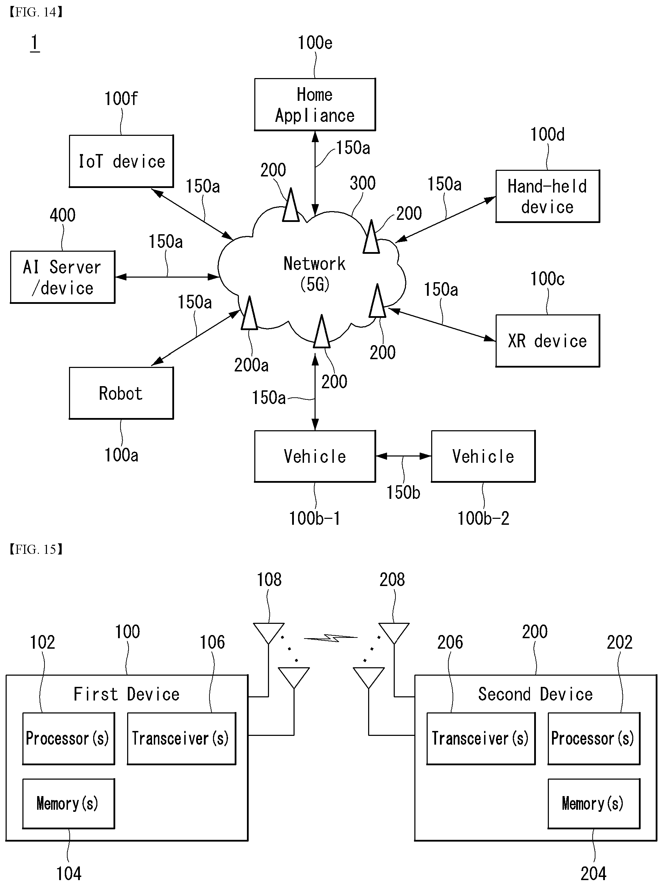

FIG. 14 illustrates a communication system applied to various embodiments of the present disclosure.

Referring to FIG. 14, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE), 6G wireless communication) and may be referred to as communication/radio/5G devices/6G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, or a 6G network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

### Wireless device applicable to the present disclosure

Examples of wireless devices to which various embodiments of the present disclosure are applied are described below.

FIG. 15 illustrates wireless devices applicable to various embodiments of the present disclosure.

Referring to FIG. 15, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 14.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

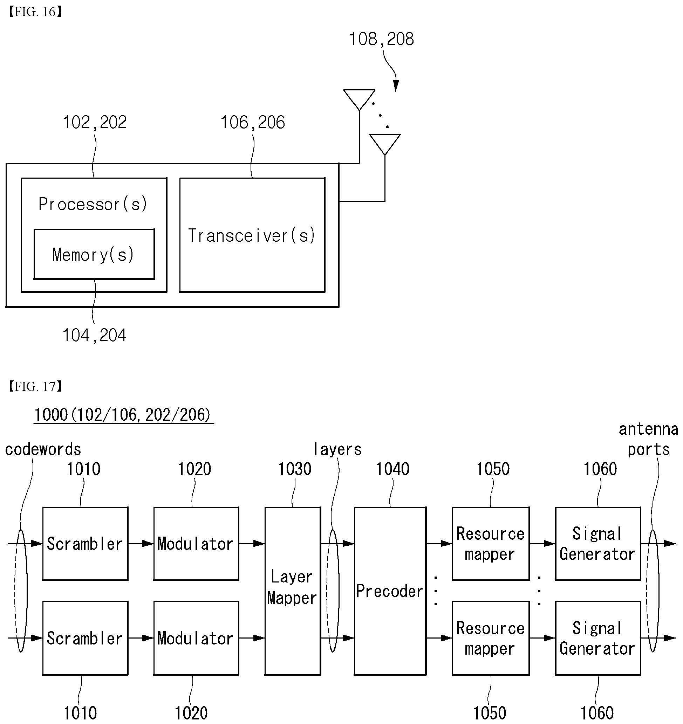

FIG. 16 illustrates another example of wireless devices applicable to various embodiments of the present disclosure.

According to FIG. 16, a wireless device may include at least one processor 102 and 202, at least one memory 104 and 204, at least one transceiver 106 and 206, one or more antennas 108 and 208.

A difference between the example of the wireless device illustrated in FIG. 15 and the example of the wireless device illustrated in FIG. 16 is that the processors 102 and 202 and the memories 104 and 204 are separated from each other in FIG. 15, but the memories 104 and 204 are included in the processors 102 and 202 in FIG. 16.

Here, the detailed description of the processors 102 and 202, the memories 104 and 204, the transceivers 106 and 206, and the antennas 108 and 208 are the same as described above, and thus the description of the repeated description is omitted in order to avoid unnecessary repetition of description.

Examples of signal processing circuit to which various embodiments of the present disclosure are applied are described below.

FIG. 17 illustrates a signal processing circuit for a transmission signal.

Referring to FIG. 17, a signal processing circuit 1000 may include scramblers 1010, modulators 1020, a layer mapper 1030, a precoder 1040, resource mappers 1050, and signal generators 1060. An operation/function of FIG. 17 may be performed, without being limited to, the processors 102 and 202 and/or the transceivers 106 and 206 of FIG. 15. Hardware elements of FIG. 17 may be implemented by the processors 102 and 202 and/or the transceivers 106 and 206 of FIG. 15. For example, blocks 1010 to 1060 may be implemented by the processors 102 and 202 of FIG. 15. Alternatively, the blocks 1010 to 1050 may be implemented by the processors 102 and 202 of FIG. 15 and the block 1060 may be implemented by the transceivers 106 and 206 of FIG. 15.

Codewords may be converted into radio signals via the signal processing circuit 1000 of FIG. 17. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 17. For example, the wireless devices (e.g., 100 and 200 of FIG. 15) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

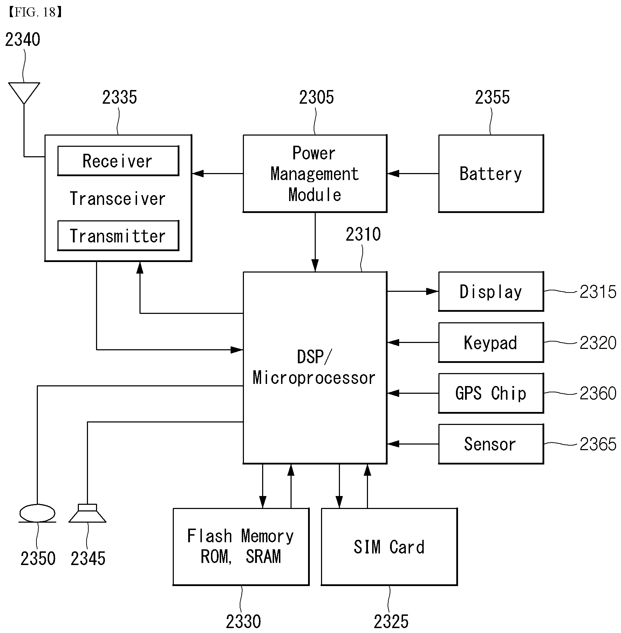

FIG. 18 illustrates an example of a wireless communication device applicable to the present disclosure.

Referring to FIG. 18, a wireless communication device, for example, a UE may include at least one of a processor 2310 such as a digital signal processor (DSP) or a microprocessor, a transceiver 2335, a power management module 2305, an antenna 2340, a battery 2355, a display 2315, a keypad 2320, a global positioning system (GPS) chip 2360, a sensor 2365, a memory 2330, a subscriber identification module (SIM) card 2325, a speaker 2345 and a microphone 2350. A plurality of antennas and a plurality of processors may be provided.

The processor 2310 may implement functions, procedures and methods described in the present disclosure. The processor 2310 in FIG. 18 may be the processors 102 and 202 in FIG. 16.

The memory 2330 is connected to the processor 2310 and stores information related to operations of the processor 2310. The memory 2330 may be located inside or outside the processor 2310 and connected to the processor through various techniques such as wired connection and wireless connection. The memory 2330 in FIG. 18 may be the memories 204 and 204 in FIG. 16.

A user may input various types of information such as telephone numbers using various techniques such as pressing buttons of the keypad 2320 or activating sound using the microphone 2350. The processor 2310 may receive and process the information of the user and execute an appropriate function such as calling using the input telephone number. In some scenarios, data may be retrieved from the SIM card 2325 or the memory 2330 to execute appropriate functions. In some scenarios, the processor 2310 may display various types of information and data on the display 2315 for user convenience.

The transceiver 2335 is connected to the processor 2310 and transmit and/or receive radio frequency (RF) signals. The processor 2310 may control the transceiver 2335 in order to start communication or to transmit RF signals including various types of information or data such as voice communication data. The transceiver 2335 includes a transmitter and a receiver for transmitting and receiving the RF signals. The antenna 2340 may facilitate transmission and reception of the RF signals. In some implementation examples, when the transceiver receives an RF signal, the transceiver may forward and convert the signal into a baseband frequency for processing performed by the processor. The signal may be processed through various techniques, such as converting into audible or readable information, and output through the speaker 2345. The transceiver 2335 in FIG. 18 may be the transceivers 106 and 206 in FIG. 16.

Although not illustrated in FIG. 18 various components such as a camera and a universal serial bus (USB) port may be additionally included in the UE. For example, the camera may be connected to the processor 2310.

FIG. 18 is merely an example of implementation with respect to the UE, and the present disclosure is not limited thereto. The UE need not essentially include all the components illustrated in FIG. 18. That is, some of the components, for example, the keypad 2320, the GPS chip 2360, the sensor 2365, and the SIM card 2325 may not be essential components. In this case, they may not be included in the UE.

The embodiments of the present disclosure described above are combinations of elements and features of the present disclosure. The elements or features may be considered selective unless otherwise mentioned. Each element or feature may be practiced without being combined with other elements or features. Further, an embodiment of the present disclosure may be constructed by combining parts of the elements and/or features. Operation orders described in embodiments of the present disclosure may be rearranged. Some constructions of any one embodiment may be included in another embodiment and may be replaced with corresponding constructions of another embodiment. It is obvious to those skilled in the art that claims that are not explicitly cited in each other in the appended claims may be presented in combination as an embodiment of the present disclosure or included as a new claim by subsequent amendment after the application is filed.

In the present disclosure, specific operations described to be performed by the base station may be performed by an upper node of the base station in some cases. That is, in a network including a plurality of network nodes including the base station, it is obvious that various operations performed for communication with the UE can be performed by the base station or network nodes other than the base station. The base station may be replaced with terms such as a fixed station, Node B, eNode B (eNB), and an access point.

The embodiments of the present disclosure may be achieved by various means, for example, hardware, firmware, software, or a combination thereof. In a hardware configuration, the methods according to the embodiments of the present disclosure may be achieved by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, microcontrollers, microprocessors, etc.

In a firmware or software configuration, the embodiments of the present disclosure may be implemented in the form of a module, a procedure, a function, etc. For example, software code may be stored in a memory unit and executed by a processor. The memories may be located at the interior or exterior of the processors and may transmit data to and receive data from the processors via various known means.

Although embodiments of the present disclosure have been described using the LTE system, the LTE-A system and the NR system, this is merely an example and embodiments of the present disclosure can be applied to any communication system corresponding to the above definition.

In the present disclosure, specific operations described to be performed by the base station may be performed by an upper node of the base station in some cases. That is, in a network including a plurality of network nodes including the base station, it is obvious that various operations performed for communication with the UE can be performed by the base station or network nodes other than the base station. The base station may be replaced with terms such as a fixed station, Node B, eNode B (eNB), and an access point, and the name of the base station may be used as a comprehensive term including a remote radio head (RRH), eNB, a transmission point (TP), a reception point (RP), a relay, etc.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

## Claims

1. An operating method of an electronic device in a wireless communication device, wherein the electronic device includes a first device and a second device, the method comprising:
receiving, by the first device, first semi-static time division duplex (TDD) resource allocation information including a plurality of first flexible resources not allocated to uplink (UL) or downlink (DL) from a base station;
receiving, by the first device, TDD UL-DL additional configuration information from the base station;
determining, by the second device, second semi-static TDD resource allocation information by updating one or more of the plurality of first flexible resources in the first semi-static TDD resource allocation information based on the TDD UL-DL additional configuration information, and
forwarding, by the second device, a signal from the base station to a user equipment (UE), or forwarding a signal from the UE to the base station, based on the second semi-static TDD resource allocation information.

2. The method of claim 1, wherein the TDD UL-DL additional configuration information includes dynamic TDD uplink-downlink (UL-DL) configuration information to be applied to the first device, and
wherein the TDD UL-DL additional configuration information is received through control information for the first device, or
wherein the TDD UL-DL additional configuration information is received through scheduling information for the first device.

3. The method of claim 1, wherein the second semi-static TDD resource allocation information includes information of one or more second flexible resources, and
wherein the one or more second flexible resources are a propagation delay between UL and DL, and forwarding of a signal by the second device is not performed in the one or more second flexible resources.

4. The method of claim 1, wherein the TDD UL-DL additional configuration information includes dynamic TDD uplink-downlink (UL-DL) configuration information to be applied to the first device, and
wherein the second semi-static TDD resource allocation information include information of one or more second flexible resources, and
wherein the one or more second flexible resources are a propagation delay between UL and DL, and forwarding of a signal by the second device is not performed in the one or more second flexible resources.

5. The method of claim 1, wherein the second semi-static TDD resource allocation information is determined by updating one or more of the plurality of first flexible resources in the first semi-static TDD resource allocation information to be identical to one or more resources in the TDD UL-DL additional configuration information.

6. The method of claim 1, wherein a resource not corresponding to the TDD UL-DL additional configuration information among the plurality of first flexible resources is maintained as a second flexible resource in the second semi-static TDD resource allocation information.

7. The method of claim 1, wherein the TDD UL-DL additional configuration information includes only UL or DL information for a specific symbol included in a specific slot among the plurality of first flexible resources, and
wherein based on that the specific symbol is UL, the second semi-static TDD resource allocation information is determined by updating all first flexible resources included in the specific slot among the plurality of first flexible resources to UL, and
wherein based on that the specific symbol is DL, the second semi-static TDD resource allocation information is determined by updating all first flexible resources included in the specific slot among the plurality of first flexible resources to DL.

8. The method of claim 1, wherein the TDD UL-DL additional configuration information includes UL or DL information for a first symbol included in a first slot among the plurality of first flexible resources and UL or DL information for a second symbol included in a second slot adjacent to the first slot among the first flexible resources, and
wherein based on that the first symbol and the second symbol are UL, the second semi-static TDD resource allocation information is determined by updating all first flexible resources between the first symbol and the second symbol to UL, and
wherein based on that the first symbol and the second symbol are DL, the second semi-static TDD resource allocation information is determined by updating all first flexible resources between the first symbol and the second symbol to DL.

9. The method of claim 1, wherein based on that the second semi-static TDD resource allocation information to be applied to the second device is different from third semi-static TDD resource allocation information to be applied to the first device, transmission and reception of a signal by the first device and transmission and reception of a signal by the second device are performed based on the third semi-static TDD resource allocation information.

10. The method of claim 1, wherein based on that the second semi-static TDD resource allocation information to be applied to the second device is different from third semi-static TDD resource allocation information to be applied to the first device, the transmission and reception of the signal by the first device and the transmission and reception of the signal by the second device are performed based on the second semi-static TDD resource allocation information.

11. An operating method of a base station in a wireless communication system, the method comprising:
transmitting, to a first device of an electronic device including the first device and a second device, first semi-static time division duplex (TDD) resource allocation information including a plurality of first flexible resources not allocated to uplink (UL) or downlink (DL),
transmitting TDD UL-DL additional configuration information to the first device; and
receiving a signal from a user equipment (UE), which is forwarded from the second device, based on second semi-static TDD resource allocation information, or
transmitting a signal to be forwarded to the UE to the second device,
wherein the second semi-static TDD resource allocation information is information acquired by updating one or more of the plurality of first flexible resources in the first semi-static TDD resource allocation information based on the TDD UL-DL additional configuration information.

12. The method of claim 11, wherein the TDD UL-DL additional configuration information includes dynamic TDD uplink-downlink (UL-DL) configuration information to be applied to the first device, and
wherein the TDD UL-DL additional configuration information is received through control information for the first device, or
wherein the TDD UL-DL additional configuration information is received through scheduling information for the first device.

13. The method of claim 11, wherein the second semi-static TDD resource allocation information includes information of one or more second flexible resources, and
wherein the one or more second flexible resources are a propagation delay between UL and DL, and forwarding of a signal by the second device is not performed in the one or more second flexible resources.

14. The method of claim 11, wherein the second semi-static TDD resource allocation information is determined by updating one or more of the plurality of first flexible resources in the first semi-static TDD resource allocation information to be identical to one or more resources in the TDD UL-DL additional configuration information.

15. The method of claim 11, wherein a resource not corresponding to the TDD UL-DL additional configuration information among the plurality of first flexible resources is maintained as a second flexible resource in the second semi-static TDD resource allocation information.

16. The method of claim 11, wherein the TDD UL-DL additional configuration information includes only UL or DL information for a specific symbol included in a specific slot among the plurality of first flexible resources, and
wherein based on that the specific symbol is UL, the second semi-static TDD resource allocation information is determined by updating all first flexible resources included in the specific slot among the plurality of first flexible resources to UL, and
wherein based on that the specific symbol is DL, the second semi-static TDD resource allocation information is determined by updating all first flexible resources included in the specific slot among the plurality of first flexible resources to DL.

17. An electronic device in a communication system, comprising:
a first device including a first transceiver;
a second device including a first transceiver;
at least one processor; and
at least one memory operably connectable to the at least one processor, and storing instructions of performing operations based on being executed by the at least one processor,
wherein the operations include all steps of the method of any one of claims 1 to 10.

18. A base station in a communication system, comprising:
a transceiver;
at least one processor; and
at least one memory operably connectable to the at least one processor, and storing instructions of performing operations based on being executed by the at least one processor,
wherein the operations include all steps of the method of any one of claims 11 to 16.

19. A control device controlling an electronic device in a communication system, comprising:
at least one processor; and
at least one memory operably accessing the at least one processor,
wherein the at least one memory stores instructions for performing operations based on being executed by the at least one processor, and
wherein the operations include all steps of the method of any one of claims 1 to 10.

20. One or more non-transitory computer readable media storing one or more instructions, wherein the one or more instructions perform operations based on being executed by one or more processors, and
wherein the operations include all steps of the method of any one of claims 1 to 10.
